(19) Europäisches Patentamt
European Patent Office
Office européen des brevets

(11) Veröffentlichungsnummer: **0 471 318 B1**

(12) **EUROPÄISCHE PATENTSCHRIFT**

(45) Veröffentlichungstag der Patentschrift: **08.03.95**

(51) Int. Cl.[6]: **C01B 15/12**

(21) Anmeldenummer: **91113450.0**

(22) Anmeldetag: **10.08.91**

Die Akte enthält technische Angaben, die nach dem Eingang der Anmeldung eingereicht wurden und die nicht in dieser Patentschrift enthalten sind.

# (54) Verfahren zur Herstellung von agglomeriertem Natriumperborat-Monohydrat mit verbesserten Eigenschaften.

(30) Priorität: **16.08.90 DE 4025856**
**08.07.91 DE 4122513**

(43) Veröffentlichungstag der Anmeldung:
**19.02.92 Patentblatt 92/08**

(45) Bekanntmachung des Hinweises auf die Patenterteilung:
**08.03.95 Patentblatt 95/10**

(84) Benannte Vertragsstaaten:
**AT BE DE ES FR GB IT NL SE**

(56) Entgegenhaltungen:
**EP-A- 0 328 768**
**EP-A- 0 433 653**
**WO-A-91/02696**
**DE-B- 1 037 432**
**DE-B- 1 052 372**
**DE-C- 246 713**
**DE-C- 534 282**
**FR-A- 2 207 859**
**FR-A- 2 285 339**

(73) Patentinhaber: **SOLVAY INTEROX GmbH**
**Dr.-Gustav-Adolph-Strasse 3**
**D-82049 Höllriegelskreuth (DE)**

(72) Erfinder: **Dötsch, Werner**
**Kreuzgasse 3**
**W-5462 Bad Hönningen (DE)**
Erfinder: **Rösler, Richard**
**Arienheller 3**
**W-5456 Rheinbrohl (DE)**
Erfinder: **Pfeifer, Hans-Ludwig**
**Silbergrube 12**
**W-5462 Bad Hönningen (DE)**

(74) Vertreter: **Lauer, Dieter, Dr.**
**c/o Solvay Deutschland GmbH**
**Hans-Böckler-Allee 20**
**D-30173 Hannover (DE)**

**EP 0 471 318 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zur Herstellung von aus Natriumperborat-Monohydrat (PBS-1) bestehenden Agglomeraten bzw. Granulaten, bei welchem durch ein Entwässerungsverfahren aus Natriumperborat-Tetrahydrat (PBS-4) hergestellte PBS-1-Primärpartikel einer verdichtenden Pressagglomeration und einer nachfolgenden Zerkleinerung unterworfen werden, sowie auf die durch dieses Verfahren erhätlichen PBS-1-Granulate.

Natriumperborat-Monohydrat ist die (entgegen der Handelsbezeichnung) im wesentlichen Kristallwasserfreie, Peroxogruppen enthaltende Borsauerstoffverbindung der Zusammensetzung $NaBO_2(OH)_2$ bzw. "$NaBO_3$ x $H_2O$". Charakteristisches Strukturmerkmal dieses Produktes ist der nachfolgend dargestellte Anionenring:

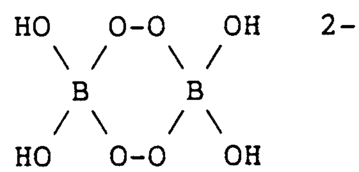

Der Aktivsauerstoffgehalt des PBS-1 beträgt in der Regel 15 bis 16 Gew.-%. Die Herstellung von Perborat-Monohydrat durch Entwässerung von Perborat-Tetrahydrat ist im Stand der Technik bekannt. So beschreiben die deutschen Patentschriften DE 22 58 319 und DE 24 44 780 die Herstellung von abriebfestem Natriumperborat-Monohydrat durch Entwässerung von durch Kristallisation gewonnenem Natriumperborat-Tetrahydrat, wobei man in der die Kristallkörner umgebenden Luft eine relative Feuchtigkeit von 40 bis 80 %, vorzugsweise von 50 bis 70 %, aufrechterhält und die Temperatur der Abluft auf mindestens 60 °C einstellt, damit ein Anschmelzen des Perborates erreicht wird.

Zwar ist es danach im Stand der Technik möglich, ein abriebfestes PBS-1 mit an sich bereits guten Eigenschaften herzustellen, wie insbesondere hinsichtlich Abriebfestigkeit und Lösegeschwindigkeit. Andererseits ist dieses PBS-1 aber mit Formulierungsbestandteilen von Maschinengeschirrspülmitteln zu wenig verträglich und auch hinsichtlich der Stabilität in Waschpulverformulierungen wären weitere Verbesserungen noch wünchenswert.

Es bestand daher die Aufgabe, die nachteiligen Eigenschaften des durch Entwässerung von PBS-4 gewonnenen PBS-1, insbesondere die mangelnde Stabilität, zu beheben, ohne jedoch die bereits günstigen Eigenschaften des PBS-1, wie Abriebfestigkeit und Lösegeschwindigkeit zu beeinträchtigen.

Zur Lösung dieser Aufgabe schlägt die Erfindung ein Verfahren zur Herstellung von Natriumperborat-Monohydrat-Granulaten durch Preßagglomeration vor, bei dem man durch ein Entwässerungsverfahren aus Natriumperborat-Tetrahydrat hergestellte Natriumperborat-Monohydrat-Primärpartikel mit einer wenigstens leicht strukturierten Walzenpresse zu Schülpen verdichtet und die so erhaltenen Natriumperborat-Monohydrat-Schülpen zu einem Granulat mit gewünschter Korngröße zerkleinert, welches sich dadurch auszeichnet, daß man in der Preßagglomeration trockene Natriumperborat-Monohydrat-Primärpartikel mit einer spezifischen Oberfläche (gemessen nach BET) im Bereich von größer 4 $m^2$/g bis 10 $m^2$/g einsetzt und ohne Zusatz von Agglomerierungshilfsmitteln verdichtet.

Nach dem erfindungsgemäßen Verfahren werden weitgehend trockene Primärpartikel einem Preßvorgang unterworfen und durch Einwirkung des hierfür aufgewendeten Preßdruckes verdichtet. Dadurch wird die erwünschte Zusammenlagerung (Agglomeration) der eingesetzten Primärpartikel bewirkt. Da die Agglomeration durch Fressen bzw. Ausübung eines Druckes zustandekommt, wird der verdichtende Preßvorgang auch als Preß- bzw. Druckagglomeration oder im Falle der Granulatherstellung auch als Preß- bzw. Druckgranulation bezeichnet. Das Preßagglomerationsverfahren zur Herstellung von Agglomeraten bzw. Granulaten ist somit von den sogenannten Aufbauagglomerationsverfahren (Aufbaugranulationsverfahren), bei denen die Haftung zwischen den Partikeln ohne wesentliche Druckeinwirkung ausschließlich durch Verkleben mit Flüssigkeit (z.B. Wasser) und/oder Bindemittel vermittelt wird, zu unterscheiden.

Zwar ist es bekannt, Agglomerationsverfahren zur Verbesserung von Produkteigenschaften einzusetzen, jedoch werden Agglomerate im Stand der Technik unter anderem z.B. hergestellt, um Produkte mit Depotwirkung zu erzielen. Demgegenüber überrascht es, daß die Preßagglomeration der Primärpartikel aus Natriumperborat-Monohydrat, trotz der verdichtenden Wirkung dieses Verfahrens, nicht zu Produkten mit einer Depotwirkung, d.h. einer verzögerten Freigabe bzw. Auflösung des Produktes, führt. Vielmehr erhält man durch Preßagglomeration der Natriumperborat-Primärpartikel Produkte mit einer im Vergleich zu den

Primärpartikeln im wesentlichen nicht beeinträchtigten Lösegeschwindigkeit in Wasser oder überwiegend Wasser enthaltenden Medien.

Der Temperaturbereich, in welchem das Preßagglomerationsverfahren der Erfindung durchgeführt werden kann, entspricht dem Temperaturbereich, in dem gute thermische Stabilität der eingesetzten Aktivsauerstoff-haltigen Verbindungen gegeben ist und das Verfahren unter Sicherheitsaspekten unproblematisch ausführbar ist. Die Preßagglomeration der Primärpartikel aus Natriumperborat-Monohydrat wird z.B. in einer zweckmäßigen Ausgestaltung der Erfindung bei Temperaturen zwischen etwa 20 bis 50 °C durchgeführt. Das Verfahren ist in diesem Temperaturbereich hinsichtlich des Aktivsauerstoffgehaltes der zu pressenden Natriumperborat-Primärpartikel unproblematisch durchzuführen; das Produkt beeinträchtigende Aktivsauerstoffverluste werden nicht beobachtet.

Die Größe des zur Erzielung der Vorteile der Erfindung aufzuwendenden Druckes ist zwar in weiten Grenzen frei wählbar und kann daher speziellen Wünschen bzw. Anforderungen hinsichtlich des Produktes angepaßt werden; nach unteren Werten hin wird der Druck jedoch durch zwei Vorgaben mitbestimmt. Einerseits sollte der mindestens aufzubringende Druck dazu ausreichen, um dem Agglomerat der Primärpartikel eine ausreichende mechanische Festigkeit und Schüttdichte zu verleihen und um andererseits gleichzeitig eine ausreichende Erhöhung der Stabilität in insbesondere Maschinengeschirrspülmitteln und auch in Pulverwaschmitteln zu erzielen. Der zur Erzielung der gewünschten Eigenschaften mindestens aufzuwendende Preßdruck hängt von der Art der eingesetzten Preßmaschinen ab und kann im Hinblick auf die gewünschten Produkteigenschaften vom Fachmann leicht in einigen wenigen Vorversuchen ermittelt werden. Die obere Grenze des aufzubringenden Druckes ist nicht kritisch und wird lediglich durch den jeweils technisch maximal erreichbaren bzw. zulässigen Druck der für die Preßagglomeration eingesetzten Apparate begrenzt. In einer beispielhaften Ausgestaltung der Erfindung werden z.B. die Primärpartikel aus Natriumperborat-Monohydrat in der Walzenpresse durch Pressen bei Drucken von wenigstens 0,2 t bis maximal etwa 2 t pro cm Walzenlänge verdichtet. Bevorzugt wird bei Drucken von wenigstens 0,8 t pro cm Walzenlänge verdichtet.

Gegenüber den feinen Primärpartikelhaufwerken sind die erfindungsgemäß intermediär erhaltenen Agglomerate geformte Produkte (Schülpen), die durch Zerkleinern in bezüglich Form und Aussehen verbesserte Agglomeratschüttungen (Granulate) umgewandelt werden. Die erhaltenen Granulate neigen in pulverförmigen Wasch-, Reinigungs- und Geschirrspülmittelzusammensetzungen weniger zum Stauben, Anhaften, Entmischen und insbesondere weniger zum Zusammenbacken. Sie lassen sich gut dosieren und transportieren, und sie besitzen eine ausgezeichnete Rieselfähigkeit und eine gut definierte Schüttdichte. Nach dem erfindungsgemäßen Verfahren lassen sich Produkteigenschaften wie Agglomeratform und -größe bzw. Granulatform und -größe, sowie Schüttgewicht des Perborates den Anforderungen an unterschiedliche Anwendungszwecke oder sonstige Erfordernisse des Marktes anpassen. So lassen sich nach dem erfindungsgemäßen Verfahren besonders schwere und grobe Perboratprodukte herstellen, die durch die herkömmliche Herstellung von PBS-1 aus Perborattetrahydrat (PBS-4) allein nicht erhalten werden können.

Für das Verfahren der Erfindung lassen sich an sich alle üblichen, wenigstens leicht strukturierten Walzenpressen einsetzen. Erfindungsgemäß ist es nicht erforderlich, die Primärpartikel feucht oder gegebenenfalls unter Zusatz von geringen Mengen Flüssigkeit, Bindemittel, Gleitmittel, weiteren Hilfsstoffen und/oder anderen Additiven, durch Pressen zu agglomerieren. Die Vorteile der Erfindung liegen im Einsatz eines Preßagglomerationsverfahrens, bei dem ausschließlich trockenes Primärpartikelgut verpreßt wird. Daher wird bei diesem Verfahren die Stabilität des Produktes (insbesondere die Aktivsauerstoff-Stabilität) nicht durch anwesende oder zugeführte Flüssigkeit (insbesondere Wasser) negativ beeinflußt und eine an die Agglomeration anschließende Trocknung erübrigt sich. Ein weiterer Vorteil ist dadurch gegeben, daß auch Bindemittel, Gleitmittel und/oder weitere Hilfsstoffe (die zwar gewünschtenfalls zugesetzt werden können) für die Durchführung des Verfahrens nicht zwingend erforderlich sind und beim erfindungsgemäßen Verfahren unter Einsatz von wenigstens leicht strukturierten Walzenpressen vermieden werden; somit lassen sich unerwünschte, ggf. durch diese Zusatz- und Hilfsstoffe bedingte Eigenschaftsveränderungen in den gepreßten Natriumperborat-Monohydrat-Agglomeraten und den daraus hergestellten Granulaten vermeiden. Es ist andererseits aber durchaus möglich, andere gewünschte, die Eigenschaften der Agglomerate bzw. Granulate in zweckmäßiger Weise modifizierende Additive wie z.B. Farbstoffe mit den zu verpressenden Primärpartikeln vor der Preßagglomeration homogen zu vermischen.

Im erfindungsgemäßen Verfahren werden wenigstens leicht strukturierte Walzenpressen (Strukturwalzen) eingesetzt. Die Strukturwalzen sind geriffelte oder kontinuierlich profilierte Walzen zur Erzeugung von strukturierten oder profilierten Platten (Schülpen) oder Bändern. Bei den Strukturwalzen können leicht oder stärker profilierte Walzen, letztere in offener oder geschlossener Einstellung, eingesetzt werden. Man erhält so leicht oder stärker strukturierte (z.B. waffelartige) Schülpen, Wellplatten oder Bänder.

Die durch Preßagglomeration erhaltenen Produkte wie Schülpen, Wellplatten oder Bänder können nach an sich bekannten Verfahren zu Granulaten gewünschter Korngröße und Schüttdichte zerkleinert werden. Zur Zerkleinerung eignen sich z.B. Fladen- oder Schülpenbrecher für eine Grobgranulierung oder Granuliersiebe für eine Feingranulierung. Es können so beispielsweise Natriumperborat-Monohydrat-Granulate mit mittleren Korndurchmessern im Bereich von 0,1 bis 10 mm erhalten werden. Zweckmäßige und bevorzugte mittlere Korndurchmesser sind weiter unten eingehender beschrieben.

Die im erfindungsgemäßen Verfahren der Preßagglomeration zugeführten trockenen, Eristallwasserfreien Primärpartikel aus PBS-1 werden durch ein an sich übliches Entwässerungsverfahren aus kristallisiertem Natriumperborat-Tetrahydrat (PBS-4) hergestellt. Sowohl die Herstellung der Primärpartikel im Entwässerungsverfahren als auch die Preßagglomeration können unabhängig voneinander jeweils für sich kontinuierlich betrieben werden. Es ist nicht zwingend, die Primärpartikel nach deren Gewinnung durch das Entwässerungsverfahren unmittelbar der Preßagglomeration zuzuführen.

So kann das Primärpartikelgut durchaus z.B. zwischengelagert werden bzw. die Entwässerung und die Preßagglomeration in separaten Betrieben durchgeführt werden. Eine besonders vorteilhafte Ausgestaltung der Erfindung ist die vollkontinuierliche Verfahrensweise. Bei dieser vollkontinuierlichen Verfahrensweise werden trockene Primärpartikel direkt nach ihrer Gewinnung einer Preßagglomerationseinrichtung zugeführt, zu Schülpen gepreßt und nachfolgend die Schülpen zu Granulaten gewünschter Korngröße und Schüttdichte zerkleinert.

Die im Verfahren der Erfindung verwendeten Primärpartikel sind weitgehend trockene und kristallwasserfreie Partikel aus Natriumperborat-Monohydrat, die eine bestimmte Mindestoberfläche aufweisen. Geeignet sind PBS-1-Primärpartikel mit einer spezifischen Oberfläche (gemessen nach BET) im Bereich von größer 4 $m^2/g$ bis etwa 10 $m^2/g$. Bevorzugt werden PBS-1-Primärpartikel mit spezifischen Oberflächen größer 5 $m^2/g$, insbesondere größer 6 $m^2/g$ für die Preßagglomeration ohne Zusatz von Hilfsmitteln für die Agglomerierung eingesetzt.

Zur Entwässerung des PBS-4 zum PBS-1 können bekannte Einrichtungen wie Wirbelbetttrockner, Vibrationstrockner, Stromtrockner oder auch Kombinationen von Trocknern unter schiedlicher Bauart zum Entwässern von zentrifugenfeuchtem Natriumperborat-Tetrahydrat angewendet werden. Zusätzliche Aggregate sind nicht notwendig. Bei der Herstellung von Perborat-Monohydrat nach den Verfahren der deutschen Patent schriften DE 22 58 319 und DE 24 44 780 können jedoch ent sprechende Vorrichtungen zur Dosierung von Wasserdampf in die Entwässerungsluft zur Aufrechterhaltung der in diesem Verfahren gewünschten relativen Luftfeuchte und deren Kontrolle vorhanden sein; zweckmäßigerweise werden dort jedoch Entwässerungseinrichtungen verwendet, die es gestatten, Wasserdampf in einen kontinuierlichen Luftstrom einzuführen oder aber Abluft umzuführen. Zur Herstellung der PBS-1-Primärpartikel werden in bekannter Weise die für die Herstellung von Natriumperborat-Monohydrat aus Natriumperborat-Tetrahydrat in oben genannten Entwässerungsanlagen geeigneten Verfahrensbedingungen eingestellt.

Da die Haltbarkeit des Natriumperborat-Tetrahydrates im trockenen Zustand stark beeinflußt ist von der Anwendung geeigneter Stabilisatoren, werden bereits bei der Herstellung von PBS-4 aus Natriummetaborat und Wasserstoffperoxid (und anschließende Kristallisation) geeignete Stabilisatoren für Perverbindungen in das PBS-4 eingebracht, die dann auch das durch Entwässerung von PBS-4 hergestellte PBS-1 stabilisieren. Die Stabilisatoren werden in an sich zur Stabilisierung von Perboratverbindungen geeigneten Mengen eingesetzt. Als Stabilisatoren eignen sich beispielsweise Alkalimetall- oder Magnesiumsilikate, Magnesiumsulfat, Phosphate, wie Metaphosphat, organische Stabilisatoren wie Chinolinsäure, Salicylsäure oder Dipicolinsäure (DPA), Chelatbildner wie 8-Oxychinolin oder Ethylendiamintetraessigsäure (EDTA), Phosphonsäurederivate wie z.B. Methylen- oder Aminomethylenphosphonsäuren oder deren Salze, sowie auch geringe Mengen üblicher Netzmittel. Stabilisatoren können in üblichen Konzentrationen von 0,1 bis 10 g/kg in den zur Kristallisation des Tetrahydrates dienenden Lösungen bzw. Suspensionen vorliegen. Die Stabilisatoren werden vorzugsweise bereits in die Reaktionsgemische zur Herstellung des Natriumperborat-Tetrahydrates eingebracht. In einfacher Weise kann dieses über die eingesetzte Wasserstoffperoxidlösung erreicht werden. Insbesondere werden die Stabilisatoren dabei in solchen Mengen eingesetzt, wie sie später auch in den NatriumperboratMonohydrat-Agglomeraten bzw. Granulaten vorliegen sollen.

Die nach dem Verfahren der Erfindung erhältlichen Natriumperborat-Monohydrat-Granulate besitzen im allgemeinen mittlere Korndurchmesser im Bereich von etwa 0,3 bis etwa 3 mm. Vorteilhafte erfindungsgemäß hergestellte Granulate zeichnen sich hierbei durch mittlere Korndurchmesser von größer 0,5 mm, vorzugsweise von größer 1 mm, und durch Schüttdichten von größer 0,6 g/ml bis 0,9 g/ml, vorzugsweise von größer 0,75 g/ml bis 0,9 g/ml, aus. Sie weisen weiterhin sehr gute Abriebfestigkeit und verringerte Neigung zum Zusammenbacken in pulverförmigen Wasch-, Reinigungs- und Maschinengeschirrspülmittelzusammensetzungen auf.

Die Natriumperborat-Monohydrat-Granulate nach dem erfindungsgemäße Verfahren zeichnen sich durch eine im Vergleich zum nichtverdichtetem PBS-1 unverändert hohe Lösegeschwindigkeit in Wasser aus. Die Lösegeschwindigkeit beträgt z.B. bei vorteilhafen Natriumperborat-Monohydrat-Granulaten mehr als 80 %, bei bevorzugten Natriumperborat-Monohydrat-Granulaten sogar mehr als 90 %. Die Lösegeschwindigkeit wird hierbei unter Standardbedingungen 3 Minuten, 15 °C, 2 g/l bestimmt.

Die Erfindung umfaßt ferner farbige Perborat-Monohydrat-Granulate, die nach dem erfindungsgemäßen Verfahren hergestellt werden können, indem den PBS-1-Primärpartikeln vor dem Verfahrensschritt der Preßagglomeration ein Farbstoffpulver homogen zugemischt wird.

Durch die Erfindung wird ein einfaches Verfahren zur Herstellung von Natriumperborat-Monohydrat-Granulaten zur Verfügung gestellt. Nach dem erfindungsgemäßen Verfahren sind Granulate in einfacher Weise realisierbar, die sich für eine Vielzahl unterschiedlicher Anwendungen auf dem Bleich-, Desinfektions-, Reinigungs- und Waschmittelsektor sowie insbesondere auch hervorragend für den Einsatz in Maschinengeschirrspülmitteln eignen. Die nach dem erfindungsgemäßen Verfahren herstellbaren Granulate lassen sich z.B. hinsichtlich ihrer Eigenschaften wie Korngröße oder Schüttdichte bestens in gewünschter Weise einstellen und können daher leicht an sich diesbezüglich ändernde Erfordernisse, d.h. an die Korngrößen und Schüttgewichte anderer Formulierungsbestandteile, angepaßt werden. Das Verfahren vermeidet in seinen Ausgestaltungen im Gegensatz zu üblichen Feuchtgranulationsmethoden (Aufbaugranulationsverfahren) jegliche Einwirkung von Feuchtigkeit (z.B. freies Wasser oder Kristallwasser) auf die im erfindungsgemäßen Verfahren erzeugten Primärpartikel ("Trockenverfahren") und führt zu Natriumperborat-Monohydrat-Agglomeraten bzw. Granulaten mit guten Produkteigenschaften. Die erfindungsgemäß hergestellten Perborat-Granulate zeigen unvermindert gute Lösegeschwindigkeiten in wäßrigen Medien und deutlich verbesserte Lagerstabilität. Dieses zeigt sich einerseits in der guten Stabilisierung des Aktivsauerstoffgehaltes, wodurch selbst unter extremen Lagerbedingungen Aktivsauerstoffverluste deutlich verringert werden. Andererseits zeigen die erfindungsgemäß hergestellten Natriumperborat-Monohydrat-Granulate verbessertes Caking-Verhalten, d.h. deutlich verminderte Neigung zum Zusammenbacken, in pulverförmigen Wasch-, Reinigungs- und Maschinengeschirrspülmittelzusammensetzungen.

Nachfolgend wird die Erfindung anhand von Beispielen weiter erläutert, ohne sie jedoch in ihrem Umfange zu beschränken.

In den nachfolgenden Beispielen wurden die folgenden Abkürzungen verwendet:

| | |
|---|---|
| Avox | = Aktivsauerstoff |
| Mg-Stearat | = Magnesiumstearat |
| n.b. | = nicht bestimmt |

Beispiel 1:

In Analogie zu den Lehren der deutschen Patentschriften 22 58 319 und 24 44 780 wurden zunächst aus Natriumperborat-Tetrahydrat (gewonnen durch eine bekannte und an sich übliche großtechnische Methode zur Herstellung von kristallinem Natriumperborat-Tetrahydrat) Primärpartikel von Natriumperborat-Monohydrat hergestellt. Das anfallende, trockene und kristallwasserfreie Primärpartikelgut wurde gesammelt und für die Preßagglomeration einer leicht strukturierten Walzenpresse zugeführt. Die Primärpartikel wurden mit einem Preßdruck von 0,8 t/cm Walzenlänge (= ca. 50 bar) bis 1,6 t/cm Walzenlänge (= ca. 100 bar) zu Schülpen mit einer Dicke von 1 mm gepreßt und anschließend in an sich bekannter Weise durch Granuliersiebe (Maschenweiten 2 mm oder 3,5 mm) fein granuliert. Die eingesetzten PBS-1-Primärpartikel (V1) und die daraus hergestellten Natriumperborat-Monohydrat-Granulate wiesen die in der Tabelle 1 angegebenen Produkteigenschaften auf. In den Beispielen 1c bis 1f wurde das Granulat mit feineren Sieben noch in Kornfraktionen entsprechend der in Tabelle 1 angegebenen Bereiche der Kornverteilung aufgetrennt. In den erfindungsgemäßen Beispielen 1a bis 1f wurden für die Preßagglomeration keine Agglomerierungshilfsmittel den zu verdichtenden PBS-1-Primärpartikeln zugesetzt. In einem Vergleichsbeispiel (V2) wird gezeigt, daß durch Zusätze wie Magnesiumstearat bei der Preßagglomeration die Lösegeschwindigkeit des hergestellten PBS-1-Granulates deutlich vermindert wird.

Tabelle 1

| | Vergleich Primärpartikel PBS-1 | Vergleichsbeispiel | Erfindungsgemäße Natriumperborat-Monohydrat-Granulate | | | | | |
|---|---|---|---|---|---|---|---|---|
| | V1 | V2 | 1a | 1b | 1c | 1d | 1e | 1f |
| AVOX (%) | 15,6 | 15,6 | 15,6 | 15,2 | 15,6 | 15,6 | 15,6 | |
| Schüttdichte (kg/l) | 0,58 | 0,84 | 0,68 | 0,77 | 0,69 | 0,63 | 0,60 | 0,58 |
| Lösegeschwindigkeit | | | | | | | | |
| (%) 1 min | 96 | 21 | 89 | 64 | 47 | 78 | 94 | 97 |
| 2g/l 2 min | 96 | 37 | 100 | 87 | 67 | 91 | 98 | 99 |
| 15 °C 3 min | 96 | 50 | 100 | 94 | 81 | 95 | 100 | 99 |
| Abrieb % | 5,8 | 5,1 | 5,1 | 6,3 | n.b. | n.b. | n.b. | n.b. |
| Kornverteilung (%) | | | | | | | | |
| >2000 µm | | | | | 100 | | | |
| <2000 >1000 µm | | | | | | 100 | | |
| <1000 > 630 µm | | | | | | | 100 | |
| < 630 > 250 µm | | | | | | | | 100 |
| >1000 µm | 0 | 70,2 | 53,4 | 48,7 | | | | |
| <1000 > 800 µm | 0,1 | 12,0 | 17,0 | 16,5 | | | | |
| < 800 > 600 µm | 2,3 | 5,8 | 8,1 | 9,3 | | | | |
| < 600 > 500 µm | 21,1 | 5,2 | 8,5 | 8,7 | | | | |
| < 500 > 420 µm | 22,4 | 2,4 | 4,5 | 5,5 | | | | |
| < 420 > 300 µm | 35,8 | 3,3 | 6,0 | 7,9 | | | | |
| < 300 > 150 µm | 18,3 | 1,1 | 2,2 | 3,1 | | | | |
| < 150 µm | 0 | 0 | 0,4 | 0,3 | | | | |
| Preßdruck (t/cm Walzenlänge) | -- | 1,6 | 0,8 | 1,6 | 0,8 | 0,8 | 0,8 | 0,8 |
| Granuliersieb (mm) | -- | 2 | 2 | 2 | 3,15 | 3,15 | 3,15 | 3,15 |
| Mg-Stearat | -- | + | -- | -- | -- | -- | -- | -- |

Beispiel 2:

Zur Untersuchung der chemischen Stabilität (Avox-Stabilität) wurden die in Beispiel 1 eingesetzten Primärpartikel und einige der daraus hergestellten Granulate auf ihre Lagerstabilität untersucht. Zur Bestimmung der Lagerstabilität wurden die Primärpartikel und die daraus hergestellten Granulate jeweils in ein standardisiertes Maschinengeschirrspülmittel in einer Menge von 14 Gew.-% bezogen auf die Gesamtmischung (weitere Bestandteile: wasserfreies Natriummetasilikat 49 Gew.-%, leichte calcinierte Soda 10 Gew.-%, Pentanatriumtriphosphat 25 Gew.-%, Polypropylenglykolethoxylat) eingebracht. Die erhaltenen

Mischungen wurden in wachslaminierte Kartons abgefüllt und anschließend bei 37 °C und einer relativen Luftfeuchtigkeit von 70 % gelagert. Nach einer Lagerzeit von jeweils einer, zwei, vier und acht Wochen wurde der durch Zersetzung bedingte Verlust an Aktivsauerstoff ermittelt (die Bestimmung des Aktivsauerstoffgehaltes vor und nach der Lagerung erfolgte durch an sich bekannte titrimetrische Methoden). Zum Vergleich wurde die Stabilität der Primärpartikel (= herkömmliches Natriumperborat-Monohydrat, hergestellt durch Wirbelbett-Trocknung von durch Kristallisation gewonnenem Natriumperborat-Tetrahydrat) unter analogen Bedingungen ermittelt. Es wurden die in der Tabelle 2 zusammengestellten Ergebnisse erhalten.

Tabelle 2

| Produkt Nr. | Rest-Avox in % nach Wochen 1 Wo | 2 Wo | 3 Wo | 4 Wo |
|---|---|---|---|---|
| 1b | 96 | 95 | 78 | 68 |
| 1c | 93 | 91 | 88 | 82 |
| Vergleich PBS-1 (Primärpartikel) | 88 | 82 | 78 | 55 |

## Patentansprüche

1. Verfahren zur Herstellung von Natriumperborat-Monohy-drat-Granulaten durch Preßagglomeration, wobei man durch ein Entwässerungsverfahren aus Natriumperborat-Tetrahydrat hergestellte Natriumperborat-Monohydrat-Primärpartikel mit einer wenigstens leicht strukturierten Walzenpresse zu Schülpen verdichtet und die so erhaltenen Natriumperborat-Monohydrat-Schülpen zu einem Granulat mit gewünschter Korngröße zerkleinert, dadurch gekennzeichnet, daß man in der Preßagglomeration trockene Primärpartikel aus Natriumperborat-Monohydrat mit einer spezi-fischen Oberfläche gemessen nach BET im Bereich von größer 4 $m^2/g$ bis 10 $m^2/g$ einsetzt und daß man ohne Zusatz von Agglomerierungshilfsmitteln verdichtet.

2. Verfahren nach Anspruch 1, dadurch gekennzeichnet, daß man als Primärpartikel Natriumperborat-Monohydrat mit einer spezifischen Oberfläche größer 5 $m^2/g$, vorzugsweise größer 6 $m^2/g$ einsetzt.

3. Verfahren nach einem der vorhergehenden Ansprüche, dadurch gekennzeichnet, daß man die Primärpartikel durch Fressen bei Temperaturen von 20 bis 50 °C verdichtet.

4. Verfahren nach einem der vorhergehenden Ansprüche, dadurch gekennzeichnet, daß man die Schülpen durch Fressen bei Drücken von wenigstens 0,2 t pro cm Walzenlänge, vorzugsweise bei Drücken von wenigstens 0,8 t pro cm Walzenlänge, herstellt.

5. Verfahren nach einem der vorhergehenden Ansprüche, dadurch gekennzeichnet, daß man den Primärpartikeln vor dem Pressen ein Farbstoffpulver homogen zumischt.

6. Farbiges Natriumperborat-Monohydrat-Granulat erhältlich nach dem Verfahren des Anspruches 5.

7. Natriumperborat-Monohydrat-Granulate nach Anspruch 6, dadurch gekennzeichnet, daß sie eine Schüttdichte von größer 0,6 g/ml bis 0,9 g/ml, vorzugsweise von größer 0,75 g/ml bis 0,9 g/ml, besitzen.

8. Natriumperborat-Monohydrat-Granulate nach Anspruch 6, dadurch gekennzeichnet, daß sie einen mittleren Korndurchmesser von größer 0,5 mm, vorzugsweise von größer 1 mm, besitzen.

## Claims

1. Process for the production of sodium perborate monohydrate granules by pressing-agglomeration, for which purpose sodium perborate monohydrate primary particles produced by a dehydration process from sodium perborate tetrahydrate are compacted with an at least lightly textured roller press to form compressed strips and the compressed strips of sodium perborate monohydrate thus obtained are comminuted to a granular material with the required grain size characterised in that, during pressing-agglomeration, dry primary particles of sodium perborate monohydrate with a specific surface area measured according to BET in the range of more than 4 $m^2/g$ to 10 $m^2/g$ are used and that compacting takes place without the addition of agglomerating aids.

2. Process according to claim 1 characterised in that sodium perborate monohydrate with a specific surface area of more than 5 $m^2/g$, preferably of more than 6 $m^2/g$ is used as primary particle.

3. Process according to one of the preceding claims characterised in that the primary particles are compacted by pressing at temperatures of 20 to 50 °C.

4. Process according to one of the preceding claims characterised in that the compressed strips are prepared by pressing at pressures of at least 0.2 t per cm roller length, preferably at pressures of at least 0.8 t per cm roller length.

5. Process according to one of the preceding claims characterised in that a pigment powder is mixed homogeneously into the primary particles before pressing.

6. Coloured sodium perborate monohydrate granules obtainable according to the process of claim 5.

7. Sodium perborate monohydrate granules according to claim 6 characterised in that they have a bulk density of more than 0.6 g/ml to 0.9 g/ml, preferably of more than 0.75 g/ml to 0.9 g/ml.

8. Sodium perborate monohydrate granules according to claim 6 characterised in that they have an average grain diameter of more than 0.5 mm, preferably of more than 1 mm.

## Revendications

1. Procédé pour la fabrication de produits de granulation de monohydrate de perborate de sodium à l'intervention d'une agglomération par pressage, dans lequel on comprime par un procédé de dessiccation des particules primaires de monohydrate de perborate de sodium préparées à partir de tétrahydrate de perborate de sodium avec une presse à cylindre au moins légèrement texturée pour obtenir des écailles et on broie les écailles de monohydrate de perborate de sodium ainsi obtenues en un produit de granulation ayant une granulométrie désirée, caractérisé en ce qu'on met en oeuvre, dans l'agglomération par pressage, des particules primaires sèches de monohydrate de perborate de sodium ayant une surface spécifique mesurée d'après BET dans le domaine de plus de 4 $m^2/g$ à 10 $m^2/g$ et en ce qu'on comprime sans addition d'adjuvants d'agglomération.

2. Procédé selon la revendication 1, caractérisé en ce que, comme particules primaires, on met en oeuvre du monohydrate de perborate de sodium ayant une surface spécifique supérieure à 5 $m^2/g$, de préférence supérieure à 6 $m^2/g$.

3. Procédé selon l'une quelconque des revendications précédentes, caractérisé en ce qu'on comprime les particules primaires par pressage à des températures de 20 à 50 °C.

4. Procédé selon l'une quelconque des revendications précédentes, caractérisé en ce qu'on fabrique les écailles par pressage sous des pressions d'au moins 0,2 t par cm de longueur de cylindre, de préférence sous des pressions d'au moins 0,8 t par cm de longueur de cylindre.

5. Procédé selon l'une quelconque des revendications précédentes, caractérisé en ce qu'on ajoute, par mélange homogène, un colorant pulvérulent aux particules primaires avant le pressage.

6. Produit de granulation coloré de monohydrate de perborate de sodium que l'on obtient conformément au procédé selon la revendication 5.

7. Produits de granulation de monohydrate de perborate de sodium selon la revendication 6, caractérisés en ce qu'ils possèdent une masse volumique apparente de plus de 0,6 g/ml à 0,9 g/ml, de préférence de plus de 0,75 g/ml à 0,9 g/ml.

8. Produits de granulation de monohydrate de perborate de sodium selon la revendication 6, caractérisés en ce qu'ils possèdent une granulométrie moyenne de plus de 0,5 mm, de préférence de plus de 1 mm.